Europäisches Patentamt

European Patent Office

Office européen des brevets

(11) Publication number: **0 271 987**
**A1**

## EUROPEAN PATENT APPLICATION

(21) Application number: **87309741.4**

(22) Date of filing: **04.11.87**

(51) Int. Cl.⁴: **B60J 7/04**

(30) Priority: **14.11.86 GB 8627212**

(43) Date of publication of application:
**22.06.88 Bulletin 88/25**

(84) Designated Contracting States:
**BE DE ES FR GB IT**

(71) Applicant: **Britax Weathershields Limited**
**180 Sherlock Street**
**Birmingham B5 7EH(GB)**

(72) Inventor: **Cunningham, Douglas James**
**42 Viking Way**
**Horndean Portsmouth Hampshire(GB)**

(74) Representative: **Hollinghurst, Antony**
**Britax Limited Patent Department Kingsham**
**Road**
**Chichester West Sussex PO19 2UG(GB)**

(54) Sliding roof for a motor vehicle.

(57) A sliding roof for a motor vehicle has a panel (10) which, in its forward position, closes an opening in a fixed vehicle roof (12). The rear edge of the panel (10) can be raised and the panel (10) then moved rearwardly so as to partially overlie the fixed vehicle roof (12) behind the opening. Respective guide tracks (20) extend longitudinally of the vehicle on each side of the opening and front guide means (24) are moveable along the guide tracks (20) and pivotally support the panel (10) on the guide tracks (20) adjacent to the front edge of the panel (10). Rear support means for the panel (10) comprises a first screw threaded member (30) journaled in bearings (32) secured to the rear edge of the opening for rotation about a vertical axis, a second screw threaded member (36) having a complementary screw thread in engagement with the screw thread of the first screw threaded member (34), a first arm (38) mounted fast with the second screw threaded member (36) so as to extend radially therefrom, a transverse guide track (58) extending along part of the rear edge of the opening, and a second arm (44) having one end pivotally connected to a slider (62) in the transverse guide track (58), its other end (46) pivotally connected to the panel (10) adjacent to the rear edge thereof and an intermediate location (42) between its ends pivotally connected to the end of the first arm (38) further from the second threaded member (36). A releaseable detent (70) is arranged to inhibit angular movement between the first and second screw threaded members (34, 36) except when the first arm (38) is at a predetermined orientation relative to the fixed vehicle roof (12) in which the panel (10) is in alignment with the opening.

FIG 3

## SLIDING ROOF FOR A MOTOR VEHICLE

This invention relates to a sliding roof for a motor vehicle of the type comprising a panel which, in its forward position, closes an opening in a fixed vehicle roof, the panel being pivotally mounted at each side adjacent to its front edge on respective front guide means which are moveable along respective guide tracks extending longitudinally of the vehicle on each side of the opening, and rear support means, including a first screw threaded member journaled in bearings secured to the rear edge of the opening for rotation about a vertical axis and a second screw threaded member having a complementary screw thread in engagement with the screw thread of the first screw threaded member, for raising the rear edge of the panel which is then moveable rearwardly so as to partially overlie the fixed vehicle roof behind the opening. An opening roof of this type is disclosed in Patent Specification GB-A-2068304.

According to the invention, in a sliding roof of the foregoing type, the rear support means further comprises a first arm mounted fast with the second screw threaded member so as to extend radially therefrom, a transverse guide track extending along part of the rear edge of the opening, a second arm having one end pivotally connected to a slider in the transverse guide track, its other end pivotally connected to the panel adjacent to the rear edge thereof and an intermediate location between its ends pivotally connected to the end of the first arm further from the second threaded member, and releaseable detent means arranged to inhibit angular movement between the first and second screw threaded members except when the first arm is at a predetermined orientation relative to the fixed vehicle roof in which the panel is in alignment with the opening.

In the embodiment of the invention shown in the accompanying drawings, the first screw threaded member has a male screw thread thereon and the second screw threaded member has a female screw thread. As an alternative, it would be possible for the first threaded member to have a female screw thread and the second a male screw thread.

In the drawings:

Figure 1 is a transverse cross-sectional view of an opening roof in accordance with the invention, with the panel in the closed position;

Figure 2 is a cross-sectional view, similar to Figure 1, with the panel in the open position in alignment with the roof opening;

Figure 3 is a cross-sectional view, similar to Figure 1, with the panel open and slid back over the fixed vehicle roof;

Figure 4 is a plan view of the rear support means for the opening roof shown in Figures 1-3 with the mechanism in the position corresponding to Figure 1;

Figure 5 is a fragmentary cross-sectional view from below of part of the mechanism shown in Figure 4;

Figures 6 and 7 are views corresponding to Figures 4 and 5 but with the mechanism in the position adopted when the panel has slid half way between its position illustrated in Figure 2 and its position illustrated in Figure 3;

Figure 8 is a cross-sectional view taken on the line 8-8 in Figure 6;

Figures 9 and 10 are views corresponding to Figures 4 and 5 but with the mechanism in the position corresponding to the position of the panel illustrated in Figure 3.

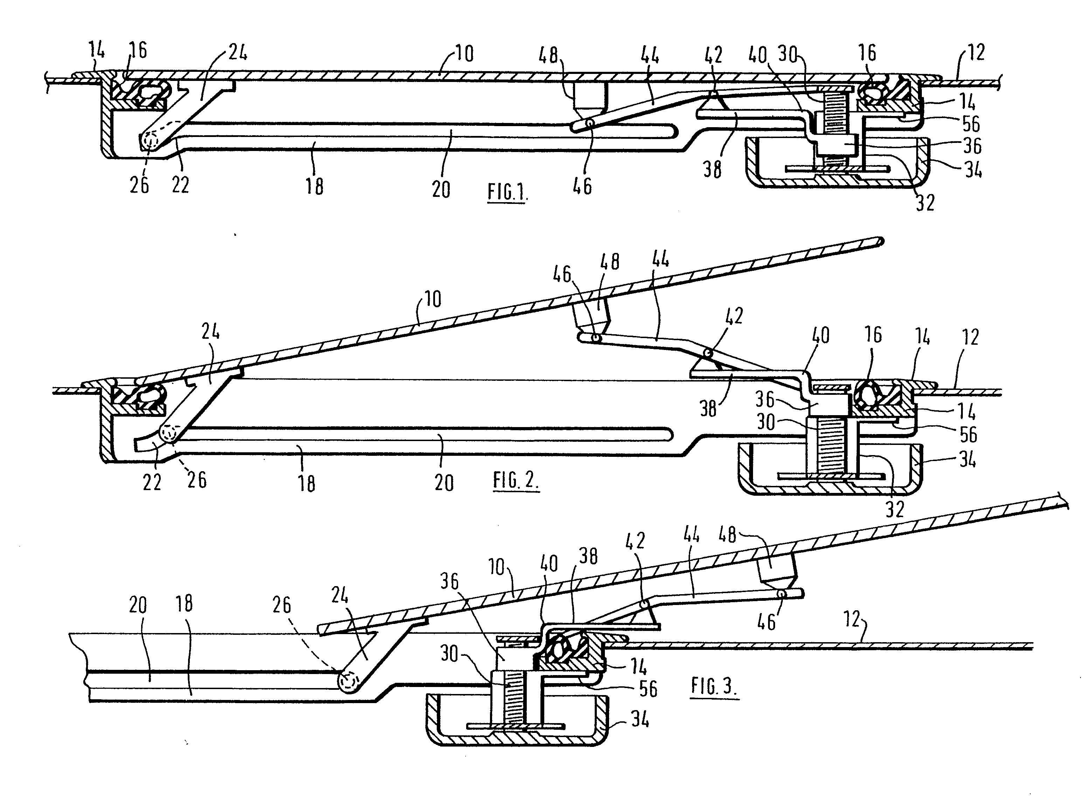

Referring to Figures 1 to 3, an opening roof for a motor vehicle comprises a moveable panel 10 which is dimensioned to cover an opening in a fixed vehicle roof 12, the opening being bounded by a frame 14 which carries a resilient rubber seal 16 having a formation to engage with the underside of the panel 10 when the latter is in its fully closed position as shown in Figure 1.

On the side of the opening illustrated in Figures 1 to 3, the frame member 14 has a downwardly extending flange 18 containing a longitudinally extending slot 20, most of which is horizontal but the front portion 22 of which slopes downwardly. A front support leg 24 is secured to the underside of the panel 10 adjacent to the front edge thereof and carries a horizontally projecting peg 26 which engages in the slot 20 so as to support the front edge of the panel. A similar front support arrangement (not shown) is provided on the other side of the roof opening.

In accordance with the invention, rear support means for the panel 10 comprises a threaded rod 30 journaled in a bracket 32 which is secured in an approximately central position to the part of the frame 14 bounding the rear edge of the opening in the vehicle roof. A knob 34, secured to the bottom of the rod 30, enables the latter to be rotated manually from inside the vehicle. A nut 36 is screwed on to the shaft 30 and has an arm 38 therewith and projecting radially therefrom. The arm 38 has an upwardly stepped formation 40 at an intermediate position along its length for a purpose which will be explained hereinafter. On its free end, the arm 38 carries a universal joint 42 by which it is connected to an intermediate point along the length of a second arm 44.

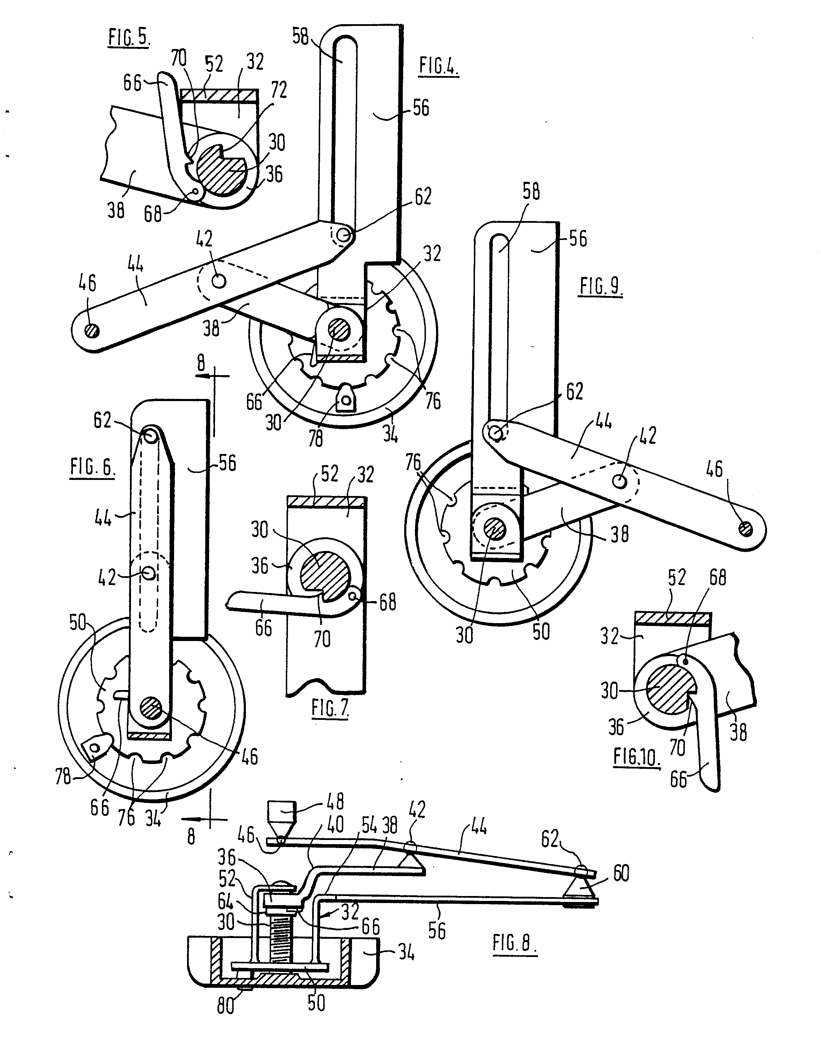

Referring now to Figures 4 to 8, the bracket 32 consists of a circular disc 50 which forms the bottom bearing for the shaft 30, together with two L-shaped members 52 and 54 which project upwardly from diametrically opposite locations on the top surface of the disc 50. The L-shaped member 52 is mounted with its second limb projecting radially inwardly relative to the disc 50 so as to form the top bearing for the rod 30. The second limb of the L-shaped member 54 projects radially outwardly and has a side flange 56 by means of which the bracket 32 is secured to the frame 14 adjacent to the flange 56. The second limb of the L-shaped member 54 contains a slot 58 which supports a slider 60 (Figure 8). The slider 60 carries a third universal joint 62 by which it is coupled to the opposite end of the second arm 44 to the second universal joint 46.

The nut 36 has a lower portion 64 of reduced diameter which accommodates a pawl 66 which is mounted on a pivotal pin 68. The pawl 66 carries a tooth 70 on one side and a complementary recess 72 is formed in the part of the rod 30 which is adjacent to the pawl 66 when the nut 36 is in its uppermost position on the rod 30. A spring (not shown) biases the pawl 66 towards the rod 30.

The disc 50 forming the bottom of the bracket 32 has a series of notches 76 in its periphery. A detent 78, coupled to a push-button 80 on the bottom of the knob 34, can be displaced into a position of engagement with any one of the notches 76 in order to secure the the rod 30 in a desired orientation.

The operation of the mechanism described above is as follows. When the panel 10 is in its closed position as shown in Figure 1, the nut 32 is near the bottom of the rod 30, the universal joints 42 and 46 are in front of the rear edge of the opening and, as can be seen from Figure 4, the slider 60, with the universal joint 62, is at the end of the slot 58 nearer to the rod 30. As can be seen from Figure 5, the detent 70 is kept out of engagement with the rod 30 by engagement of the outer end of the pawl 66 with the L-shaped member 52 of the bracket 32.

If the knob 34 is now rotated in the clockwise direction, as viewed in Figures 4, 6 and 9 (the anticlockwise direction as viewed in Figures 5, 7 and 10) the nut 36 travels up the rod 30, thus raising the universal joint 42. Since the universal joint 62 holds one end of the arm 44 at a fixed height, the other end of the arm 44 is raised by approximately twice the height through which the nut 36 is moved, thus raising the rear edge of the panel 10. When the nut 36 is at the top of the rod 30, the panel 10 is in the position shown in Figure 2. The knob 34 can be locked to hold the panel 10 in any of the intermediate positions in which the detent 78 is in alignment with a notch 76. If when the nut 36 has reached the top of the rod 32, rotation of the knob 34 continues in the same direction, the nut 36 is rotated simultaneously therewith, causing a corresponding angular movement of the arm 38 and thus moving the traveller 60 and universal joint 62 along the slot 58. As soon as this angular movement of the arm 38 commences, the pawl 66 moves out of engagement with the L-shaped member 52, thus allowing the detent 70 to move towards the rod 30. The angular position of the recess 72 in the rod 30 is such that the detent 70 immediately engages therein to prevent angular movement of the nut 38 relative to the rod 30 in the direction which would cause the nut 36 to move down the rod 30.

Such angular movement of the arm 38 moves the universal joint 46, and with it the panel 10, rearwardly, the pins 26 sliding along the slots 18 in the frame 14. When the two arms 38 and 44 are in alignment with one another and parallel to the rear edge of the opening, the traveller 60 and universal joint 62 are at the end of the slot 58 further from the rod 30 as shown in Figure 6, and the nut 36 remains locked to the rod 30 by the detent 70 as shown in Figure 7.

Continued angular movement of the knob 34 and the rod 30 moves the arm 38 towards the position shown in Figure 9, the traveller 60 and universal joint 62 returning to the end of the slot 58 nearer to the rod 30 but this time with the universal joints 42 and 46 behind the rear edge of the frame 14. The panel 10 is now in the fully open position shown in Figure 3, with the pins 26 of its front supports 24 at the rear end of the slots 20. The arm 38 projects rearwardly over the fixed vehicle roof 12, the stepped formation 40 therein allowing it to assume this position without fouling the frame 14.

The detent 70 remains engaged in the recess 72, as shown in Figure 10, thus ensuring that, if the knob 34 is rotated in the opposite direction, the arm 38 is moved back to the position illustrated in Figure 5, with the panel 10 once again in alignment with the opening in the vehicle roof 12 (as shown in Figure 2) before the nut 36 is freed to move down the rod 30. However, as the arm 38 moves back to the position shown in Figures 4 and 5, the end of the pawl 66 once again engages with the L-shaped member 52, moving the detent 70 out of the recess 72. Continued rotation of the knob 34 in the anticlockwise direction (as viewed in Figure 4) returns the panel 10 to the fully closed position as shown in Figure 1.

**Claims**

1. A sliding roof for a motor vehicle, comprising a panel (10) which, in its forward position, closes an opening in a fixed vehicle roof (12), respective guide tracks (20) extending longitudinally of the vehicle on each side of the opening, front guide means (24) moveable along the guide tracks (20) and pivotally supporting the panel (10) on the guide tracks (20) adjacent to the front edge of the panel (10), and rear support means (30, 38, 44) for raising the rear edge of the panel (10) which is then moveable rearwardly so as to partially overlie the fixed vehicle roof (12) behind the opening, a first screw threaded member (30) journaled in bearings (32) secured to the rear edge of the opening for rotation about a vertical axis, a second screw threaded member (36) having a complementary screw thread in engagement with the screw thread of the first screw threaded member (34), for raising the rear edge of the panel (10) which is then moveable rearwardly so as to partially overlie the fixed vehicle roof (12) behind the opening, characterised in that the rear support means further comprises a first arm (38) mounted fast with the second screw threaded member (36) so as to extend radially therefrom, a transverse guide track (58) extending along part of the rear edge of the opening, a second arm (44) having one end pivotally connected to a slider (62) in the transverse guide track (58), its other end (46) pivotally connected to the panel (10) adjacent to the rear edge thereof and an intermediate location (42) between its ends pivotally connected to the end of the first arm (38) further from the second threaded member (36), and releaseable detent means (70) arranged to inhibit angular movement between the first and second screw threaded members (34, 36) except when the first arm (38) is at a predetermined orientation relative to the fixed vehicle roof (12) in which the panel (10) is in alignment with the opening.

2. A sliding roof according to claim 1, wherein the releasable detent means comprises a lever (66) pivotally mounted on the second threaded member (36) and having a dentent formation (70) adapted to engage with a complementary formation (72) on the first threaded member (30) to block relative rotation between the threaded members (30, 34) in the direction to lower the rear edge of the panel (10), and a stop (52) on the rear edge of the opening in the vehicle roof (12) positioned to displace the lever (66) so as to move the detent formation (70) out of engagement with the complementary formation (72) when the first arm is at said predetermined orientation.

3. A sliding roof according to claim 1 or 2, further comprising a bracket (32) secured to the rear edge of the opening and supporting the bearings for the first threaded member and the transverse guide track (58).

4. A sliding roof according to claim 1, wherein a manually rotatable control member (34) is mounted on the bottom end of the first threaded member (30).

5. A sliding roof according to claim 4, wherein the control member (34) includes a manually releasable latch (78) for blocking rotation of the control member (34).

FIG.1.

FIG. 2.

FIG.3.

0 271 987

0 271 987

FIG. 5.

FIG. 4.

FIG. 9.

FIG. 6.

FIG. 7.

FIG. 10.

FIG. 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | DE-B-2 351 270 (WEBASTO) <br> * figure 3 * <br> --- | 1 | B 60 J 7/04 |
| D,A | GB-A-2 068 304 (ROCKWELL GOLDE) <br> * figure 10 * <br> ----- | 1 | |
| | | | **TECHNICAL FIELDS SEARCHED (Int. Cl.3)** |
| | | | B 60 J 7/00 |

The present search report has been drawn up for all claims

| Place of search | Date of completion of the search | Examiner |
|---|---|---|
| BERLIN | 03-02-1988 | BECKER W D H |

EPO FORM 1503 03.82 (P0401)